# DEMANDE DE BREVET EUROPEEN

(11) **EP 3 093 522 A1**
(43) Date de publication de la demande: **16.11.2016**
(21) Numéro de dépôt: 16168090.5
(22) Date de dépôt: 03.05.2016
(51) Int. Cl.: F16F 15/14

(54) **DISPOSITIF D'AMORTISSEMENT D'OSCILLATIONS DE TORSION**

(30) Priorité: 12.05.2015 FR 1554281
(71) Demandeur: Valeo Embrayages, 80009 Amiens Cedex 2 (FR)
(72) Inventeur: SALVADORI, David, 60530 LE MESNIL EN THELLE (FR); MORISS, Alain, 80300 ALBERT (FR)

(57) **Abrégé**

Dispositif (2) d'amortissement d'oscillations de torsion pour véhicule automobile, ce dispositif (2) comprenant :
- un support (4) mobile en rotation autour d'un axe (X),
- une pluralité de masses oscillantes (5) montées mobiles sur ce support (4), se succédant circonférentiellement, chaque masse oscillante (5) s'étendant circonférentiellement entre deux faces latérales (18),
- une pluralité d'organes de roulement (6), le déplacement de chaque masse oscillante (5) par rapport au support (4) étant guidé par un unique organe de roulement (6),

l'organe de roulement (6) guidant le déplacement d'une masse oscillante (5) par rapport au support (4) étant disposé sensiblement à mi-distance des faces latérales (18) de ladite masse oscillante (5).

## Description

La présente invention concerne un dispositif d'amortissement d'oscillations de torsion notamment pour un système de transmission d'un véhicule automobile.

Dans une telle application, le dispositif d'amortissement d'oscillations de torsion de type pendulaire, encore appelé oscillateur pendulaire ou pendule, peut être intégré à un système d'amortissement de torsion d'un embrayage apte à relier sélectivement le moteur à explosions à la boîte de vitesses, afin de filtrer les vibrations dues aux acyclismes du moteur à explosions.

En variante, dans une telle application, le dispositif d'amortissement d'oscillations de torsion peut être intégré à un composant du véhicule automobile tel qu'un disque de friction de l'embrayage ou un convertisseur de couple hydrodynamique.

Le document US-2010/0122605 représente un tel dispositif d'amortissement de type pendulaire. Un tel dispositif comprend au moins un support, couplé en rotation à un arbre du moteur à explosions, et au moins une masse oscillante, généralement plusieurs masses oscillantes réparties circonférentiellement sur le support. Le mouvement de ces masses oscillantes génère un couple oscillant qui s'oppose au couple oscillant venant du moteur et ainsi absorbe une partie des acyclismes du moteur.

Chaque masse oscillante est en général constituée par une paire de masselottes, disposées de part et d'autre du support, et solidaires entre elles, soit par une liaison mécanique directe, à travers typiquement un évidement du support, soit par l'intermédiaire d'une entretoise. Un tel ensemble de deux masselottes solidaires en vis-à-vis, avec ou sans entretoise, est considéré dans ce qui suit comme une masse oscillante unique.

La recherche d'une filtration des vibrations toujours plus performante conduit à perfectionner les dispositifs d'amortissement de torsion de type pendulaire.

On a constaté notamment que l'utilisation d'un pendule comprenant deux organes de roulement par masse oscillante, appelé « pendule bifilaire » permettait d'obtenir des performances d'amortissement supérieures à celles d'un pendule comprenant un seul organe de roulement par masse oscillante, appelé « pendule monofilaire ».

L'état de la technique conduit donc à faire un choix entre l'utilisation d'un pendule bifilaire performant mais de construction complexe, et un pendule monofilaire de construction relativement simple, mais de performances relativement modestes.

L'un des buts de l'invention est de pouvoir réaliser un dispositif d'amortissement d'oscillations de torsion de type pendulaire, présentant une grande simplicité de construction, proche de celle d'un pendule monofilaire, qui permette cependant d'obtenir des performances d'amortissement proches de celles d'un pendule bifilaire.

À cet effet, un objet de l'invention est un dispositif d'amortissement d'oscillations de torsion pour véhicule automobile comprenant :
- un support mobile en rotation autour d'un axe,
- une pluralité de masses oscillantes montées mobiles sur ce support, se succédant circonférentiellement,
- une pluralité d'organes de roulement, le déplacement de chaque masse oscillante par rapport au support étant guidé par un unique organe de roulement, et
- une pluralité d'articulations, chaque articulation reliant deux masses oscillantes adjacentes circonférentiellement, au moins une de ces articulations comprenant une pièce d'interposition distincte des masses oscillantes.

Dans un pendule bifilaire conventionnel, toute masse oscillante est en contact avec deux organes de roulement, et est retenue radialement (retenue d'un éloignement radial), en deux zones qui sont les lieux des points de contact de cette masse avec les deux éléments de roulement. Ceci assure à la fois la stabilité de la masse dans son mouvement pendulaire (en empêchant notamment tout pivotement non contrôlé), et l'obtention d'un effet bifilaire, source d'une efficacité d'amortissement supérieure à celle d'un pendule monofilaire à organe de roulement unique.

Selon l'invention, par rapport à une masse oscillante d'un pendule bifilaire conventionnel, l'un des organes de roulement est supprimé, et l'effet de retenue radiale correspondant ainsi supprimé est obtenu par les articulations.

En plus de la retenue radiale entre les masses adjacentes circonférentiellement, les articulations permettent d'obtenir un mouvement cinématique des masses oscillantes coordonné et sensiblement voisin de celui des masses oscillantes d'un pendule bifilaire conventionnel comprenant des masses oscillantes synchronisées entre elles.

Le dispositif selon l'invention permet donc d'obtenir une performance d'amortissement voisine de celle d'un pendule bifilaire, tout en divisant par deux le nombre d'organes de roulement.

L'articulation autorise un mouvement relatif entre les deux masses oscillantes qu'elle solidarise. Ce mouvement relatif peut donner lieu à des phénomènes de claquement entre les masses oscillantes ainsi articulées, notamment lors des inversions de mouvement de rotation coordonné des masses oscillantes. En effet, lors de ces inversions de mouvement de rotation, les masses oscillantes articulées se déplacent les unes par rapport aux autres et des chocs entre ces masses apparaissent. Ces phénomènes de claquement entrainent des bruits indésirables. La pièce d'interposition de l'articulation permet de minimiser les bruits liés aux chocs en évitant, dans un très grand nombre de configurations de fonctionnement du dispositif, les contacts directs entre les masses oscillantes articulées par cette articulation. Dans un dispositif selon l'invention, les contacts directs entre les masses oscillantes sont très nettement réduits.

Au sens de la présente demande :
- « axialement » signifie « parallèlement à l'axe de rotation du support »,
- « radialement » signifie « le long d'un axe appartenant à un plan orthogonal à l'axe de rotation du support et coupant cet axe de rotation du support»,
- « angulairement » ou « circonférentiellement » signifie « autour de l'axe de rotation du support » et
- « solidaire » signifie « rigidement couplé ».
- la position de repos d'une masse oscillante est la position dans laquelle la masse oscillante est soumise à une force centrifuge mais non à des acyclismes. Autrement dit, la position de repos du dispositif est observée lorsque le support ne présente aucune accélération angulaire.

La pièce d'interposition peut être apte à se déformer lors d'un mouvement relatif entre deux masses oscillantes articulées par l'articulation.

La pièce d'interposition peut être apte à se déformer élastiquement.

Des chocs peuvent avoir lieu entre au moins l'une des masses oscillantes articulées et la pièce d'interposition.

Par sa déformation, la pièce d'interposition absorbe l'énergie du choc avec l'une des masses oscillantes articulée. Cela permet avantageusement de diminuer le bruit lié au choc.

La pièce d'interposition peut être réalisée en plastique ou en métal.

Le plastique utilisé est, par exemple, un polyoxyméthylène (POM) ou un polyamide extrudé chargé de fibres de verre notamment un PA6-GF30.

Le plastique à l'aide duquel la pièce d'interposition est réalisée peut présenter un module d'Young compris entre 0,5 GPa et 25 GPa notamment compris entre 2 GPa et 10 GPa.

La pièce d'interposition peut comprendre des fibres de verre pour améliorer sa résistance mécanique.

Le métal est par exemple un bronze ou un alliage de cuivre et de béryllium.

Seule une partie de la pièce d'interposition apte à venir en contact d'une des masses oscillantes peut être réalisée à partir d'un matériau de faible raideur.

Dans certaines configurations de fonctionnement du dispositif, le déplacement relatif entre les deux masses oscillantes articulées par l'articulation peut être sensiblement circonférentiel. L'articulation peut mettre en oeuvre un contact glissant sensiblement circonférentiel entre la pièce d'interposition et l'une des masses oscillantes qu'elle articule.

Ceci signifie que chaque surface de glissement fournie par l'articulation est orientée circonférentiellement.

La pièce d'interposition peut être entrainée en rotation par l'autre des masses oscillantes. La pièce d'interposition peut notamment être immobile ou mobile avec un jeu limité par rapport à cette masse oscillante.

Ce contact glissant induit des frottements, typiquement indésirables, parfois désignés comme « sources d'hystérésis » (ou d'irréversibilités).

Toutefois, l'effet d'hystérésis induit par ce contact glissant est relativement limité, voire très limité, selon l'invention, car l'ensemble des masses oscillantes pendulaires du dispositif selon l'invention fonctionnent de façon coordonnée, de sorte que le déplacement relatif entre deux masses oscillantes adjacentes circonférentiellement dans une direction circonférentielle est bien inférieur au déplacement des masses oscillantes par rapport au support toujours dans une direction circonférentielle.

L'effet de retenue radiale des masses oscillantes peut être obtenu dans l'articulation par ce contact glissant sensiblement circonférentiel.

L'articulation peut aussi être agencée pour que les masses oscillantes qu'elle articule soient liées entre elles en permanence. Autrement dit, l'articulation confère un « caractère imperdable », l'une par rapport à l'autre, aux masses oscillantes articulées.

Dans un premier mode de réalisation du dispositif selon l'invention, l'articulation comprend :
- une forme mâle s'étendant depuis une face latérale d'une des masses oscillantes en direction de la face latérale en regard de l'autre masse oscillante, et
- une forme femelle ménagée dans ladite face latérale de l'autre masse oscillante, la pièce d'interposition étant montée dans la forme femelle et coopérant avec la forme mâle.

Les faces latérales des masses oscillantes peuvent être sensiblement planes et orientées selon une direction circonférentielle.

Dans ce mode de réalisation, au niveau de l'articulation, les masses adjacentes circonférentiellement se recouvrent circonférentiellement, il existe un plan comprenant l'axe de rotation coupant chacune la forme mâle et la masse dans laquelle est ménagée la forme femelle.

Les faces latérales peuvent être formées de parties disjointes, notamment séparées par la forme femelle ou la forme mâle.

Les articulations peuvent être agencées afin de limiter la distance entre les faces latérales de chaque masse oscillante en regard. De préférence, les masses oscillantes adjacentes circonférentiellement ne viennent que rarement en contact, toutefois dans certaines configurations de fonctionnement du dispositif, les surfaces latérales en regard peuvent venir en contact l'une de l'autre selon leurs extrémités radialement intérieures ou radialement extérieures.

La distance maximale entre les faces latérales peut être comprise entre 5 mm et 15 mm notamment égale à 10 mm.

Dans ce premier mode de réalisation, chaque masse oscillante peut comprendre une forme mâle et une forme femelle.

En variante, chaque masse oscillante peut comprendre deux formes mâles ou deux formes femelles, des formes de type opposées étant ménagées sur chaque face latérale des masses oscillantes adjacentes circonférentiellement.

Dans un tel mode de réalisation, la pièce d'interposition peut être mobile par rapport à la forme femelle. La pièce d'interposition peut être entrainée en rotation par la forme femelle tout en étant mobile avec un jeu limité dans une direction circonférentielle par rapport à cette forme femelle. Ce jeu limité peut notamment être compris entre 0,5mm et 3mm.

La pièce d'interposition peut être mobile avec frottement par rapport à la forme femelle de manière à amortir les chocs liés aux déplacements des masses oscillantes articulées.

La forme femelle peut comprendre une première cavité débouchant sur la face latérale et une deuxième cavité borgne ménagée dans le fond de la première cavité.

Ces première et deuxième cavités peuvent être reliées par un canal à bord droit.

La pièce d'interposition peut comprendre une première portion montée dans la première cavité et une deuxième portion montée dans la deuxième cavité.

Lorsque les première et deuxième portions de la pièce d'interposition sont respectivement montées dans les première et deuxième cavités de la forme femelle, la pièce d'interposition ne peut pas « s'échapper » de la forme femelle dans une direction circonférentielle.

La pièce d'interposition peut être montée dans la forme femelle selon une direction axiale.

La première portion peut comprendre deux bras reliés à la deuxième portion : un bras radialement intérieur et un bras radialement extérieur.

La deuxième portion de la pièce d'interposition peut être de forme circulaire dans un plan perpendiculaire à l'axe de rotation.

Les dimensions de la deuxième portion de la pièce d'interposition peuvent être choisies pour que celle-ci ne traverse pas le canal reliant les deux cavités de la forme femelle.

Les bras de la première portion d'une telle pièce d'interposition peuvent se rapprocher l'un de l'autre lorsqu'ils sont comprimés. Ces deux bras peuvent être en permanence en contact de la première cavité.

La forme mâle peut comprendre une extrémité circulaire, dans un plan perpendiculaire à l'axe de rotation. Cette extrémité circulaire peut être reliée par un doigt à la face latérale depuis laquelle s'étend la forme mâle.

La première cavité peut présenter un rétrécissement dans un plan perpendiculaire à l'axe de rotation pour contraindre l'extrémité circulaire de la forme mâle à reposer en permanence dans la forme femelle, de sorte que les masses oscillantes articulées soient liées entre elles en permanence. La venue de la forme mâle en contact du rétrécissement peut définir la distance maximale entre les faces latérales des masses oscillantes articulées.

La pièce d'interposition, par ses deux bras, peut venir en contact de la forme mâle, au niveau de son extrémité circulaire.

Lors d'un déplacement relatif entre les masses oscillantes articulées, des chocs peuvent avoir lieu entre la forme mâle et l'un des bras de la pièce d'interposition. Sous ces chocs, la pièce d'interposition se déforme pour absorber une partie de l'énergie libérée, le bruit lié aux chocs s'en trouve donc diminué.

L'effet de maintien radial est obtenu par le contact glissant sensiblement circonférentiel entre le bras radialement extérieur de la pièce d'interposition et l'extrémité circulaire de la forme mâle.

Selon une variante de ce mode de réalisation du dispositif selon l'invention, la pièce d'interposition peut être montée sur la forme mâle et coopérer avec la forme femelle.

Dans une telle variante, la forme femelle peut ne comprendre que la première cavité. Cette première cavité peut alors être de forme oblongue.

Dans une telle variante, la pièce d'interposition peut être clipsée sur la forme mâle formant ainsi un ensemble solidaire en rotation. La pièce d'interposition peut entourer toute l'extrémité circulaire de la forme mâle.

Dans une telle variante, la pièce d'interposition et la forme femelle peuvent être en contact glissant sensiblement circonférentiel.

Dans un tel mode de réalisation, la pièce d'interposition peut être réalisée à partir d'un métal.

Selon un deuxième mode de réalisation du dispositif selon l'invention, l'articulation comprend deux formes femelles, une des formes femelles étant ménagée dans la face latérale d'une des masses oscillantes, et l'autre forme femelle étant ménagée dans la face latérale en regard de l'autre masse oscillante, la pièce d'interposition définit deux formes mâles coopérant respectivement avec une des formes femelles, l'une des formes mâles étant immobile par rapport à la forme femelle avec laquelle elle coopère et l'autre forme mâle étant mobile par rapport à la forme femelle avec laquelle elle coopère.

Dans ce mode de réalisation, il peut ne pas exister de plan comprenant l'axe de rotation et coupant les deux masses circonférentiellement adjacentes au niveau de l'articulation.

Chaque articulation peut mettre en oeuvre deux formes femelles identiques de sorte que la masse peut définir une symétrie par rapport à un plan comprenant l'axe de rotation.

En variante, chaque articulation met par exemple en oeuvre deux formes femelles différentes. D'une forme femelle de l'articulation à l'autre, la dimension radiale et/ou circonférentielle peut être différente de manière à obtenir les coopérations différentes mentionnées ci-dessus avec une des formes mâles.

Dans un tel mode de réalisation, la pièce d'interposition peut être réalisée à partir d'un plastique. Dans un tel mode de réalisation, la pièce d'interposition peut être réalisée en métal.

L'immobilisation d'une des formes mâles de la pièce d'interposition avec l'une des formes femelles de l'articulation peut être obtenue par verrouillage de forme.

La forme mâle peut être insérée dans la forme femelle correspondante selon une direction axiale et elle peut être montée à force.

En variante, l'immobilisation de cette forme mâle peut être obtenue par bouterollage.

La forme femelle et la forme mâle mobile par rapport à celle-ci peuvent avoir des formes différentes permettant un mouvement relatif entre ces dernières.

Un tampon peut être prévu entre la forme femelle et la forme mâle mobile par rapport à cette forme femelle pour amortir les chocs. Cela permet notamment de réduire les bruits liés à ces chocs.

Le tampon peut être en élastomère ou en plastique, par exemple un polyoxyméthylène (« POM »), un polyamide (« PA») ou un « ABS ». Un tel matériau permet d'obtenir un son « mat », de courte durée et sans résonnance.

Par exemple, la forme mâle peut être, dans un plan perpendiculaire à l'axe de rotation, de forme circulaire et la forme femelle par rapport à laquelle elle est mobile, peut comprendre une cavité oblongue dans ce même plan.

Le bord de la cavité oblongue peut être continu et il peut comprendre deux bords droits, un bord radialement intérieur et un bord radialement extérieur, reliés entre eux par un fond de forme circulaire.

Le diamètre de la forme mâle peut être inférieur à la distance minimale entre les bords de la cavité oblongue de sorte qu'un mouvement relatif est permis entre la forme femelle et la forme mâle.

Les deux formes mâles de la pièce d'interposition peuvent être identiques, ce qui donne à la pièce d'interposition une forme symétrique par rapport à un plan contenant l'axe de rotation, notamment une forme d'osselet.

Les faces d'extrémités, axialement parlant, de la pièce d'interposition peuvent être creusées. La pièce d'interposition peut présenter une périphérie continue d'épaisseur axiale constante et notamment égale à l'épaisseur des masses oscillantes et une zone centrale d'épaisseur axiale inférieure à celle de ladite périphérie. Cette forme permet avantageusement à la pièce d'interposition de se déformer.

Lors d'un déplacement relatif entre les deux masses oscillantes articulées, des chocs peuvent avoir lieu entre la forme mâle et l'un des bords de la cavité de la forme femelle coopérant de façon mobile avec ladite forme mâle. La pièce d'interposition se déforme pour absorber une partie de l'énergie libérée.

Le tampon peut être solidaire de la pièce d'interposition. Il peut être surmoulé sur la forme mâle. Le tampon peut comprendre une extrémité bombée apte à coopérer avec le fond de la cavité et une extrémité agencée dans un renfoncement axial de la pièce d'interposition pour la solidarisation.

En variante, le tampon peut être solidaire du fond de la cavité, notamment surmoulé sur celui-ci. Le tampon peut, par exemple, être une bande en élastomère.

L'effet de maintien radial est obtenu par le contact glissant sensiblement circonférentiel entre le bord radialement extérieur de la cavité de la forme femelle et la forme mâle défini par la pièce d'interposition.

Selon une variante du deuxième mode de réalisation, la forme mâle mobile par rapport à une des formes femelles peut définir dans un plan perpendiculaire à l'axe de rotation, une pluralité de bras deux à deux distincts, chaque bras comprenant une extrémité libre apte à venir en contact avec le contour de la cavité oblongue de la forme femelle.

Les premier et deuxième bras peuvent être sensiblement en prolongement l'un de l'autre et le troisième bras peut être perpendiculaire à ces deux bras.

L'autre forme mâle immobile par rapport à la forme femelle peut être telle que décrite en référence à ce deuxième mode de réalisation.

Selon cette variante, la forme mâle, mobile par rapport à l'une des formes femelles de l'articulation, peut définir un premier et un deuxième bras, respectivement apte à venir en contact des bords radialement intérieur et radialement extérieur de la cavité oblongue de la forme femelle et un troisième bras, apte à venir en contact du fond circulaire de cette cavité oblongue.

Selon cette variante, le tampon peut être prévu entre le troisième bras et le fond de la cavité. Le tampon peut être solidaire de ce troisième bras, notamment surmoulé sur celui-ci.

Lors d'un déplacement relatif entre les masses oscillantes articulées, des chocs peuvent avoir lieu entre l'un des bras de la forme mâle et l'un des bords de la forme femelle.

L'effet de maintien radial est obtenu par le contact glissant sensiblement circonférentiel entre le bord radialement extérieur de la cavité de la forme femelle et le premier bras de la forme mâle défini par la pièce d'interposition.

Dans un tel mode de réalisation de l'invention et indépendamment de la forme de la pièce d'interposition, la forme femelle d'une masse oscillante coopérant de façon mobile avec une forme mâle peut présenter un rétrécissement de sorte que les masses oscillantes articulées soient liées entre elles en permanence. La venue de la forme mâle en contact du rétrécissement de la forme femelle par rapport à laquelle elle est mobile peut définir la distance maximale entre les faces latérales des masses oscillantes articulées.

Chaque masse oscillante peut comprendre deux formes femelles, chacune ménagée dans une face latérale de ladite masse oscillante.

Une forme femelle d'une masse oscillante peut coopérer de façon mobile avec une forme mâle d'une pièce d'interposition d'une articulation tandis que l'autre forme femelle de cette même masse oscillante peut coopérer de façon immobile avec une pièce d'interposition d'une autre articulation.

Chaque masse oscillante peut ainsi présenter, sur une de ces faces latérales une forme femelle d'un premier type et sur son autre face latérale une forme femelle d'un deuxième type.

En variante, deux formes femelles d'une même masse oscillante peuvent coopérer de façon immobile avec des formes mâles de pièces d'interposition différentes tandis que les masses oscillantes entourant cette masse oscillante présente deux formes femelles coopérant de façon mobile avec les formes mâles des pièces d'interposition.

Indépendamment du mode de réalisation du dispositif, les masses oscillantes articulées peuvent s'étendre dans une pluralité de plans perpendiculaires à l'axe de rotation et la pièce d'interposition s'étend uniquement dans ces plans. L'épaisseur axiale des organes d'interposition peut donc être inférieure ou égale à l'épaisseur axiale des masses oscillantes.

En variante, la pièce d'interposition peut comprendre une portion qui s'étend hors de ces plans, de manière à s'interposer axialement entre les masses pendulaires et le support.

Cette portion peut s'étendre axialement entre le support et au moins une des masses oscillantes articulées. En variante, cette portion peut s'étendre entre chacune des masses oscillantes et le support.

Cette portion permet avantageusement de limiter les surfaces de contact entre le support et les masses oscillantes.

Cette portion permet de maintenir la pièce d'interposition axialement, la portion étant maintenue entre les masses oscillantes articulées et le support le reste de la pièce d'interposition ne peut s'échapper dans une direction axiale.

Chaque articulation peut comprendre une pièce d'interposition. Chaque pièce d'interposition peut être identique d'une articulation à l'autre.

Chaque masse oscillante peut être identique, le dispositif comprenant entre trois et sept masses oscillantes notamment cinq. Le nombre de masses oscillantes peut être impair.

Chaque masse oscillante peut comprendre une paire de masselottes, disposées de part et d'autre du support, et solidaires entre elles.

Les masselottes d'une même masse oscillante peuvent être reliées entre elles par l'intermédiaire d'un organe de liaison, notamment d'une entretoise, qui s'étend en partie dans un évidement du support.

L'organe de liaison peut notamment définir une première piste de roulement coopérant avec l'organe de roulement pour le guidage de la masse oscillante. L'organe de roulement coopère également avec une deuxième piste de roulement solidaire du support et définie par une partie du contour de l'évidement dans lequel s'étend l'organe de liaison.

L'organe de roulement peut être tout organe roulant adéquat, par exemple un rouleau à diamètre unique ou à plusieurs diamètres correspondant à des pistes de roulements différents.

Une butée élastique peut être solidaire de l'organe de liaison. Cette organe de liaison peut venir s'interposer entre l'organe de liaison et le contour de l'évidemment afin d'amortir la venue en contact de cet organe de liaison contre ledit contour.

Lors d'un déplacement de la masse oscillante dans une direction circonférentielle, la butée élastique peut venir en contact du contour. Au-delà d'une certaine compression de la butée élastique, l'organe de liaison peut venir en contact du contour de l'évidemment afin de limiter l'usure de la butée élastique.

Les articulations peuvent relier entre elles deux masselottes circonférentiellement adjacentes. Chaque masse oscillante peut être articulée à une masse oscillante adjacente circonférentiellement via par une seule de ses masselottes. En variante, les masses oscillantes sont articulées entre elles par chacune de leurs masselottes.

Chaque organe de liaison peut être plus proche dans une direction circonférentielle de l'une des faces latérales des masselottes qu'il solidarise. Les faces latérales des masses oscillantes peuvent être les faces latérales de leurs masselottes.

En particulier, lorsque chaque masselotte comprend une forme mâle et une forme femelle, l'organe de liaison est décalé angulairement vers la forme femelle.

En particulier encore, lorsque chaque masselotte comprend deux formes femelles, l'organe de liaison est décalé angulairement vers la forme femelle coopérant de façon mobile avec une forme mâle.

L'invention a également pour objet un dispositif d'amortissement d'oscillations de torsion pour véhicule automobile, ce dispositif comprenant :
- un support mobile en rotation autour d'un axe de rotation,
- une pluralité de masses oscillantes montées mobiles sur ce support, se succédant circonférentiellement, chaque masse oscillante s'étendant circonférentiellement entre deux faces latérales,
- une pluralité d'organes de roulement, le déplacement de chaque masse oscillante par rapport au support étant guidé par un unique organe de roulement,

l'organe de roulement guidant le déplacement d'une masse oscillante par rapport au support étant disposé sensiblement à mi-distance des faces latérales de ladite masse oscillante.

Tout ce qui à été précédemment concernant le premier objet de l'invention peut s'appliquer seul ou en combinaison au dispositif décrit juste au dessus.

Chaque masse peut être articulée sur les masses circonférentiellement adjacentes. Les articulations peuvent être dépourvues de pièce autre que les masses circonférentiellement adjacentes qui forment l'articulation.

Les articulations peuvent autoriser un mouvement relatif entre les masses circonférentiellement adjacentes. Au niveau des articulations, les masses circonférentiellement adjacentes peuvent glisser l'une sur l'autre, notamment dans la direction sensiblement circonférentielle.

L'invention sera mieux comprise à la lecture de la description qui va suivre, donnée uniquement à titre d'exemple et faite en se référant aux dessins dans lesquels :
- La figure 1 représente une vue axiale schématique et partielle d'une partie d'un dispositif d'amortissement d'oscillations de torsion selon l'invention,
- Les figures 2 et 3 sont des vues d'un détail de la figure 1, le dispositif étant dans des configurations différentes de son fonctionnement.
- La figure 4 représente une vue en perspective d'une pièce d'interposition du dispositif des figures 1 et 2,
- La figure 5 est une vue d'un détail du dispositif selon un autre exemple de mise en oeuvre,
- La figure 6 est une vue en perspective de la pièce d'interposition de dispositif de la figure 5,
- La figure 7 est une vue d'un détail du dispositif selon un autre exemple de mise en oeuvre,
- La figure 8 est une vue en perspective de la pièce d'interposition de dispositif de la figure 7, et
- Les figures 9 et 10 sont des vues d'une variante de la pièce d'interposition de la figure 6.

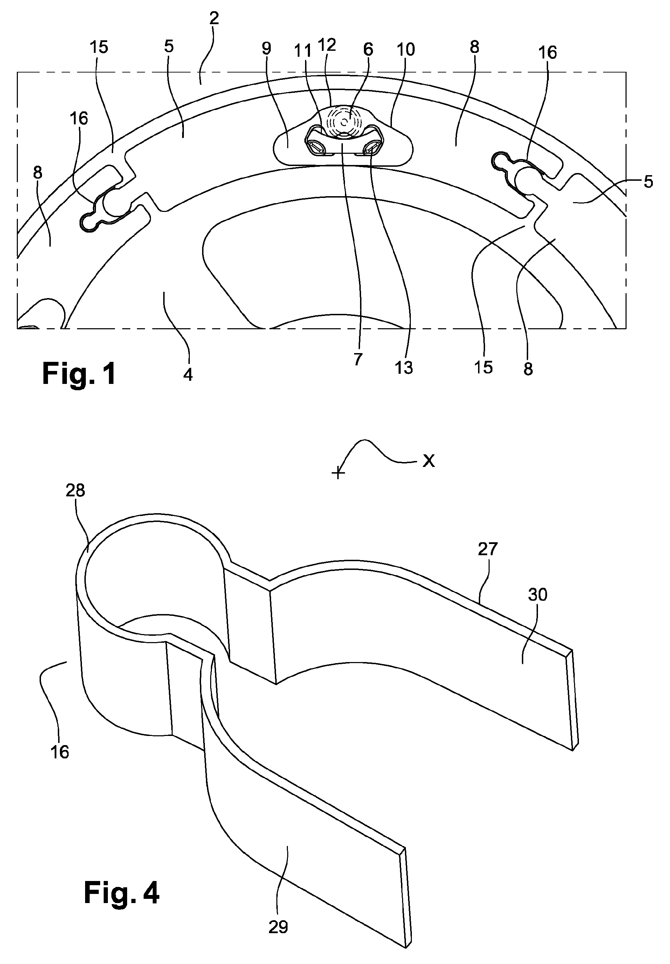

On se réfère maintenant à la figure 1, sur laquelle est représentée, de façon schématique et partielle un dispositif 2 d'amortissement d'oscillations de torsion.

Le dispositif 2 est notamment apte à équiper un système de transmission de véhicule automobile, étant par exemple intégré à un composant non représenté d'un tel système de transmission, ce composant étant par exemple un double volant amortisseur, un convertisseur de couple hydrodynamique ou un disque de friction.

Ce composant peut faire partie d'une chaîne de propulsion d'un véhicule automobile, cette dernière comprenant un moteur thermique notamment à trois ou quatre cylindres.

De manière connue, un tel composant peut comprendre un amortisseur de torsion présentant au moins un élément d'entrée, au moins un élément de sortie, et des organes de rappel élastique à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 2 comprend un support 4 qui peut être constitué par :
- un élément d'entrée de l'amortisseur de torsion,
- un élément de sortie ou un élément de phasage intermédiaire disposé entre deux séries d'organes de rappel d'un amortisseur de torsion, ou
- un élément lié en rotation à un des éléments précités et distinct de ces derniers, étant alors par exemple un support propre au dispositif 2.

Le support 4 est notamment un voile, une rondelle de guidage ou une rondelle de phasage.

Dans l'exemple considéré, le support 4 présente globalement une forme d'anneau comportant deux côtés opposés qui sont ici des faces planes.

Le support 4 est mobile autour d'un axe de rotation X, perpendiculaire au plan de la figure, ci-après dénommé axe X si aucune précision complémentaire n'est fournie.

Une pluralité de masses oscillantes 5 qui se succèdent circonférentiellement est montée mobiles sur le support 4. Dans l'exemple considéré, les masses oscillantes 5 sont au nombre de cinq et sont toutes identiques.

Les masses oscillantes 5 adjacentes circonférentiellement sont reliées entres elles par des articulations 15. Chacune de ces articulations 15 comprend une pièce d'interposition 16, identique dans chacune des articulations 15.

Le déplacement de chaque masse oscillante 5 par rapport au support 4 est guidé par un unique organe de roulement 6.

Chaque masse oscillante 5 est montée mobile sur le support 4 et comprend deux masselottes 8 présentant la même position angulaire par rapport à l'axe X, disposées de part et d'autre du support 4 et solidaires entre elles par l'intermédiaire d'un organe de liaison 7, prenant ici la forme d'une entretoise.

Dans l'exemple considéré, chaque articulation 15 relie deux masselottes 8 circonférentiellement adjacentes entre elles. Les masselottes 8 disposées de l'autre côté du support 4 et en partie masquées sur la figure 1 peuvent aussi être reliées entre elles par des articulations 15.

Un dispositif 2 représenté à la figure 1 peut donc comprendre cinq ou dix articulations selon que chacune des masses oscillantes 5 est reliées de part et d'autre du support 4.

Chaque masselotte 8 comprend deux faces latérales 18 chacune en regard d'une masselotte 8 circonférentiellement adjacente. Ces faces latérales 18 des masselottes 8 sont les faces latérales 18 de la masse oscillante 5.

Chaque organe de liaison 7 est, dans l'exemple considéré, sensiblement à égale distance entre les faces latérales 18 de la masse oscillante 5.

Comme on peut le voir à la figure 1, l'organe de roulement 6 guidant le déplacement à mi-distance d'une masse oscillante 5 est sensiblement à mi-distance entre les faces latérales 18 de cette masse oscillante 5.

Sur la figure 1, seule une masse oscillante 5 est représentée en entier et la masselotte 8 disposée du côté visible du support 4 est représentée en transparence de sorte que l'on observe les organes de roulement et de liaison 6 et 7.

Chaque organe de liaison 7 s'étend en partie dans un évidement 9 du support 4 et définit une première piste de roulement 11 coopérant par roulement avec l'organe de roulement 6.

Dans l'exemple considéré, la partie radialement extérieure du contour 10 de chaque évidement 9 définit une deuxième piste de roulement 12. Chaque évidement 9 et la deuxième piste de roulement 12 qu'il définit sont symétriques par rapport à un même plan contenant l'axe X.

Lorsque le dispositif 2 est au repos, c'est-à-dire dans la position qu'il occupe à la figure 1, chaque évidement 9, donc chaque deuxième piste de roulement 12, est à égale distance dans une direction circonférentielle des faces latérales 18.

Lors de la rotation du support 4, les masses oscillantes 5 et donc les organes de liaison 7 sont soumis à une force centrifuge. Les premières et deuxièmes pistes de roulement 11, 12 étant traversées par un même plan perpendiculaire à l'axe X, notamment le plan de la figure 1, les pistes de roulement sont axialement au même niveau, de sorte que l'organe de roulement 6 est sollicité en compression lors du fonctionnement du dispositif 2.

Lors d'un arrêt du moteur thermique ou en cas de trop faible vitesse de rotation du support 4, Les organes de roulement 6 ne roulent plus sur les pistes de roulement 11, 12 et les masses oscillantes 5 peuvent chuter radialement. Dans de telles configurations de fonctionnement du dispositif 2, la partie radialement intérieure du contour 10 limite la chute radiale de la masse oscillante 5 et une butée élastique 13 solidaire de l'organe de liaison 7 vient s'interposer entre ledit organe de liaison 7 et le contour 10 afin d'amortir la venue en contact de cet organe de liaison 7 contre le contour 10.

Dans l'exemple considéré, le contour 10 de l'évidement 9 définit également un déplacement limite de la masse oscillante 5 dans chaque direction circonférentielle et la butée élastique 13 s'interpose également entre le contour 10 et l'organe de liaison pour amortir la venue en contact. Au-delà d'une certaine compression de la butée élastique 13, l'organe de liaison 7 vient en contact du contour 10 afin de limiter l'usure de la butée élastique 13.

Cette butée élastique 13 peut être composée de caoutchouc ou d'élastomère, notamment du caoutchouc nitrile hydrogénés (HNBR).

Dans l'exemple des figures 1 à 4, chaque articulation 15 est selon le premier mode de réalisation détaillé plus haut. Chaque articulation 15 comprend :
- une forme mâle 17 s'étendant depuis une face latérale 18 d'une des masses oscillantes 5 en direction de la face latérale 18 en regard de l'autre masse oscillante 5, et
- une forme femelle 20 ménagée dans ladite face latérale 18 de l'autre masse oscillante 5 articulée, la pièce d'interposition 16 étant montée dans la forme femelle 20 et coopérant avec la forme mâle 17.

Les faces latérales 18 des masselottes 8 sont sensiblement planes et de normale de direction circonférentielle.

Les faces latérales 18 sont formées de parties disjointes séparées par la forme femelle 20 ou la forme mâle 17.

Dans l'exemple des figures 1 à 4, chaque masse oscillante 5 comprend une forme mâle 17 et une forme femelle 20.

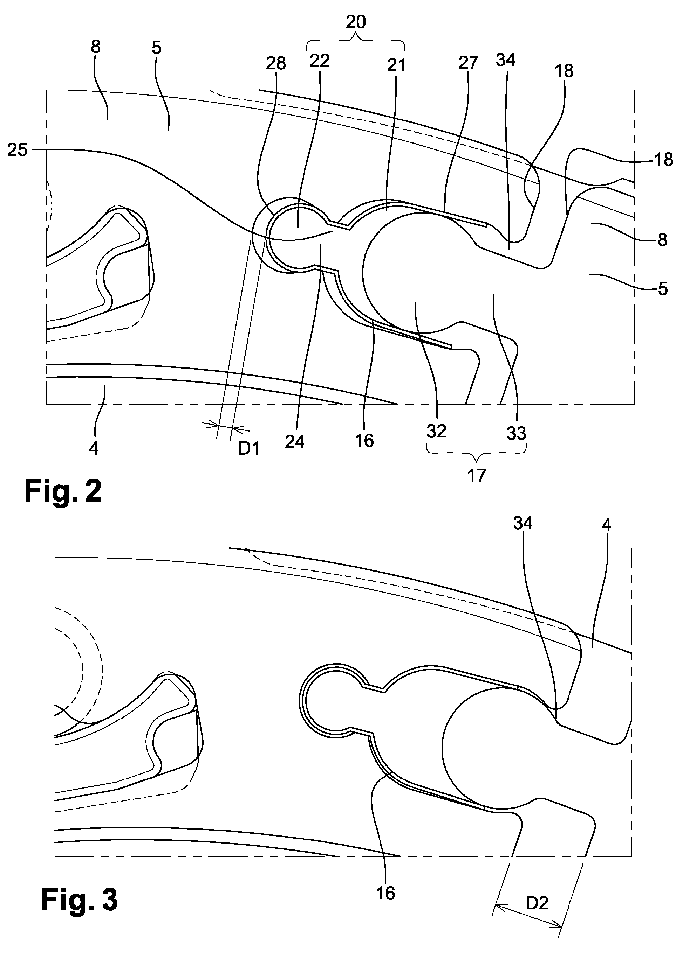

Dans l'exemple considéré et en référence à la figure 2, la forme femelle 20 comprend une première cavité 21 débouchant sur la face latérale 18 de la masse oscillante 5 dans laquelle elle est ménagée et une deuxième cavité 22 borgne ménagée dans le fond 24 de la première cavité 21.

Ces première et deuxième cavités 21, 22 sont reliées par un canal 25 à bord droit et parallèle dans le plan de la figure.

En référence aux figures 1 à 4, la pièce d'interposition 16 comprend une première portion 27 montée dans la première cavité 21 et une deuxième portion 28, circulaire, montée dans la deuxième cavité 22. La première portion 27 comprend deux bras reliés à la deuxième portion 28 : un bras radialement intérieur 29 et un bras radialement extérieur 30 et les dimensions de la deuxième portion 28 sont choisies pour que celle-ci ne traverse pas le canal 25 reliant les deux cavités 21, 22 de la forme femelle 20.

Les bras 29, 30 d'une telle pièce d'interposition 16 peuvent se rapprocher l'un de l'autre lorsqu'ils sont comprimés et ses deux bras 29, 30 peuvent être en permanence en contact des bords de la première cavité 21. La pièce d'interposition 16 est mobile avec frottement par rapport à la forme femelle 20.

Dans l'exemple considéré, la pièce d'interposition 16 est mobile avec un jeu limité D1 dans une direction circonférentielle par rapport à cette forme femelle 20. Ce jeu limité D1 est notamment compris entre 0.1 mm et 3 mm.

La forme femelle 20 entraine la pièce d'interposition 16 en rotation. Autrement dit, la pièce d'interposition 16 ne peut pas « s'échapper » de la forme femelle 20 dans la direction circonférentielle.

Les positions extrêmes de la pièce d'interposition 16 sont représentées aux figures 2 et 3.

Dans l'exemple considéré, la pièce d'interposition 16 est montée dans la forme femelle 20 selon une direction axiale.

La pièce d'interposition 16 peut être réalisée en métal.

Toujours en référence à la figure 2, la forme mâle 17 comprend une extrémité circulaire 32, dans le plan de la figure, et cette extrémité circulaire 32 est reliée par un doigt 33 à la face latérale 18 depuis laquelle s'étend la forme mâle 17. Dans certaines configurations de fonctionnement du dispositif 2, cette extrémité circulaire 32 peut venir en contact du fond 24 de la première cavité 21.

La première cavité 21 présente un rétrécissement 34 dans le plan de la figure, ce rétrécissement permet de contraindre l'extrémité circulaire 32 à reposer en permanence dans la forme femelle 20, de sorte que les masses oscillantes 5 articulées présentent un caractère imperdable l'une par rapport à l'autre. La venue de l'extrémité circulaire 32 en contact du rétrécissement 34 définie la distance maximale D2 entre les faces latérales 18 des masses oscillantes 5 articulées. Cette distance maximale D2 est par exemple égale à 10mm.

Dans certaines configurations de fonctionnement du dispositif 2, notamment lors d'inversions du sens de rotation collectif des masses oscillantes 5, celle-ci peuvent se déplacer les unes par rapport aux autres, notamment radialement. Les bras 29, 30 permettent d'éviter les contacts directs entre l'extrémité circulaire 32 de la forme mâle 17 et la partie femelle 20, mais des contacts, notamment des chocs, entre les bras 29, 30 et l'extrémité circulaire 32 apparaissent. Les bras 29, 30 se déforment alors pour absorber une partie de l'énergie de ces chocs et ainsi minimiser le bruit lié à ceux-ci.

Dans d'autres configurations de fonctionnement du dispositif 2, sous l'effet des forces centrifuges liées à la rotation du support 4, l'extrémité circulaire 32 vient en contact du bras radialement extérieur 30 selon un contact glissant sensiblement circonférentiel. Le bras radialement extérieur 30 se déforme pour épouser la forme de la première cavité 21. Ce contact permet d'obtenir l'effet de retenue radiale de chaque masse oscillante 5.

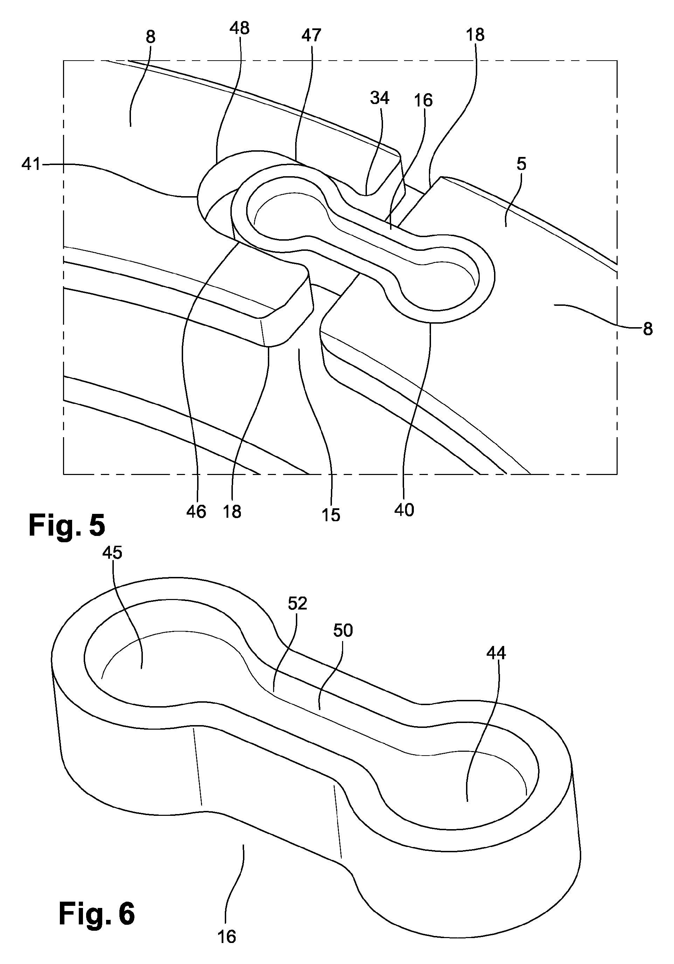

Dans l'exemple considéré aux figures 5 et 6, chaque articulation 15 est selon le deuxième mode de réalisation détaillé plus haut. Chaque articulation 15 comprend deux formes femelles, une des formes femelles 40 est ménagée dans la face latérale 18 d'une des masses oscillantes 8, et l'autre forme femelle 41 est ménagée dans la face latérale 18 en regard de l'autre masse oscillantes 5, la pièce d'interposition 16 définit deux formes mâles coopérant respectivement avec une des formes femelles, l'une des formes mâles 44 étant immobile par rapport à la forme femelle 40 avec laquelle elle coopère et l'autre forme mâle 45 étant mobile par rapport à la forme femelle 41 avec laquelle elle coopère.

Dans l'exemple considéré et en référence à la figure 5, l'immobilisation de la forme mâle 44 est obtenue par verrouillage de forme avec la forme femelle 40.

La forme mâle 44 peut être insérée dans la forme femelle 40 selon une direction axiale et elle peut être montée à force.

La forme mâle 45 est, dans un plan perpendiculaire à l'axe X, de forme circulaire et la forme femelle 41 comprend une cavité oblongue dans ce même plan.

Les deux formes mâles 44, 45 sont identiques, la pièce d'interposition 16 a donc une forme d'osselet et elle est symétrique par rapport à un plan contenant l'axe X.

Le contour de la cavité oblongue est continu et il comprend deux bords droits, un bord radialement intérieur 46 et un bord radialement extérieur 47, reliés entre eux par un fond 48 de forme circulaire.

Le diamètre de la forme mâle 45 est inférieur à la distance minimale entre les bords 46, 47 de la cavité oblongue de sorte qu'un mouvement relatif soit permis entre la forme femelle 41 et la forme mâle 45.

Dans certaines configurations de fonctionnement du dispositif 2, la forme mâle 45 peut venir en contact du fond 48.

En référence à la figure 6, les faces 50 d'extrémités, axialement parlant, de la pièce d'interposition 16 sont creusées. La pièce d'interposition 16 présente donc une périphérie continue 51 d'épaisseur axiale constante et égale à l'épaisseur des masses oscillantes 5 et une zone centrale 52 d'épaisseur axiale inférieure à celle de la périphérie continue 51. Cette forme permet avantageusement à la pièce d'interposition 16 de se déformer.

Dans l'exemple considéré, la pièce d'interposition 16 peut être réalisée en plastique.

La forme femelle présente un rétrécissement 34 dans le plan de la figure, ce rétrécissement permet de contraindre la forme mâle 45 à reposer en permanence dans la forme femelle 41, de sorte que les masses oscillantes 5 articulés présentent un caractère imperdable l'une par rapport à l'autre. La venue de la forme mâle 45 en contact du rétrécissement 34 définie la distance maximale entre les faces latérales 18 des masses oscillantes 5 articulées. Cette distance maximale est par exemple égale à 10mm.

Dans l'exemple considéré, lors d'un déplacement relatif entre les deux masses oscillantes 5 articulés, des chocs peuvent avoir lieu entre la forme mâle 45 et l'un des bords 46, 47. La pièce d'interposition 16 se déforme pour absorber une partie de l'énergie libérée.

L'effet de maintien radial des masses oscillantes 5 est obtenu par le contact glissant sensiblement circonférentiel entre le bord radialement extérieur 47 et la forme mâle 45.

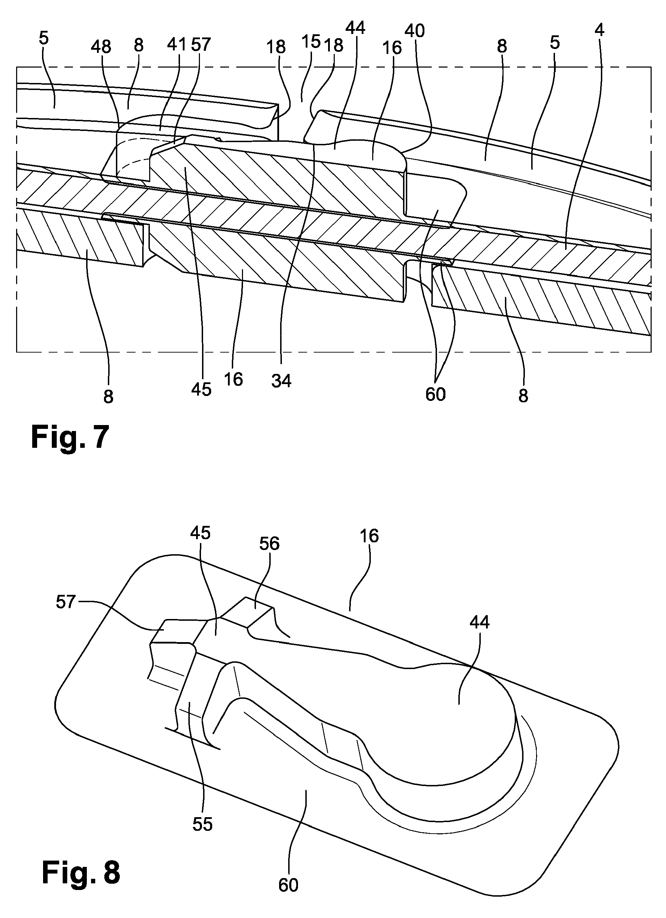

Dans l'exemple considéré aux figures 7 et 8, il est représenté un dispositif 2 qui diffère de celui présenté aux figures 5 et 6 en ce que la forme de la partie mâle 45 mobile par rapport à la partie femelle 41 est différente.

À la figure 7, il est représenté les deux masselottes 8 de chaque masse oscillante 5. Les masselottes 8 sont reliées entres elles par une articulation 15 de chaque côté du support 4.

Dans l'exemple considéré, la pièce d'interposition 16 n'est pas symétrique par rapport à un plan comprenant l'axe X, les formes mâles 44 et 45 étant différentes.

Dans l'exemple considéré, la forme mâle 45 définit dans un plan perpendiculaire à l'axe X, une pluralité de bras deux à deux distincts, chaque bras comprend une extrémité libre apte à venir en contact avec le bord de la cavité oblongue de la forme femelle 41. Les bras sont: un premier 55 et un deuxième bras 56, apte à respectivement venir en contact des bords radialement intérieur 46 et radialement extérieur 47, et un troisième bras, perpendiculaire aux deux autres bras 46, 47, apte à venir en contact du fond 48 circulaire de la cavité oblongue.

Lors d'un déplacement relatif entre deux masses oscillantes 5 articulées, des chocs peuvent avoir lieu entre le premier bras 55 et le bord radialement intérieur, non représenté à la figure 7, ou entre le deuxième bras 56 et le bord radialement extérieur 47.

L'effet de maintien radial est obtenu par le contact glissant sensiblement circonférentiel entre le bord radialement extérieur 47 et le premier bras 56.

Dans chacun des exemples présentés, les masses oscillantes 5 s'étendent dans une pluralité de plans perpendiculaires à l'axe X.

Dans les exemples de dispositif 2 présentés aux figures 1 à 4 puis 5 et 6, la pièce d'interposition 16 s'étend uniquement dans ces plans.

Dans l'exemple considéré aux figures 7 et 8, la pièce d'interposition 16 comprend une portion 60 qui s'étend hors de ces plans, de manière à s'interposer axialement entre les masses oscillantes 5 et le support 4.

Cette portion 60 s'étend axialement entre chacune des masses oscillantes 5 articulées entres elles et le support 4.

Cette portion 60 permet de limiter les surfaces de contact entre le support 4 et les masses oscillantes 5.

Cette portion 60 permet de maintenir la pièce d'interposition 16 axialement, la portion 60 étant maintenue entre les masses oscillantes 5 articulées et le support 4 le reste de la pièce d'interposition 60 ne peut s'échapper dans une direction axiale.

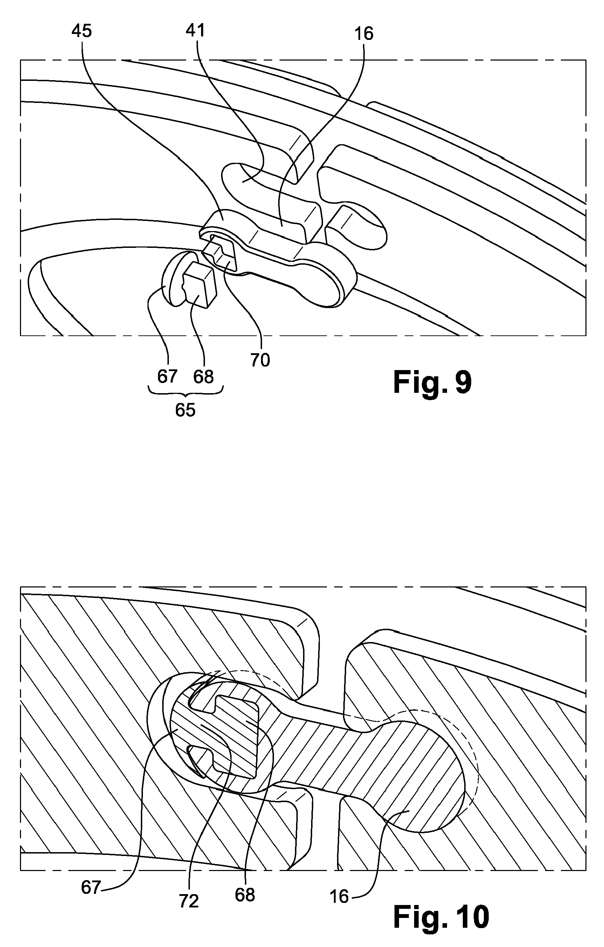

Enfin, en référence à la figure 9, il est présenté une vue éclatée et en perspective d'une variante de la pièce d'interposition 16 de la figure 6. Dans cette variante, il est prévu un tampon 65 entre la forme femelle 41 et la forme mâle 45 mobile par rapport à cette forme femelle.

Ce tampon 65 est prévu pour amortir les chocs entre la pièce d'interposition 16 et le fond de la cavité oblongue de la partie femelle 41. Cela permet de réduire les bruits liés à ces chocs entre les masses circonférentiellement adjacentes.

Dans l'exemple considéré, ce tampon 65 peut être en élastomère pour limiter les bruits liés aux chocs métal/métal ou plastique/métal.

Dans l'exemple considéré, le tampon 65 est solidaire de la pièce d'interposition 16. Il peut être surmoulé sur la forme mâle 45. Le tampon 65 comprend une extrémité bombée 67 apte à coopérer avec le fond de la cavité et une extrémité 68 agencée dans un renfoncement axial 70 de la pièce d'interposition 16 pour la solidarisation.

Comme on le voit en référence à la figure 10, l'extrémité bombée 67 et l'extrémité de solidarisation 68 sont reliées entre elles par un amincissement 72. Cet amincissement 72 permet de maintenir dans la direction circonférentielle le tampon une fois celui-ci introduit dans la pièce d'interposition 16 selon la direction axiale. Comme on le voit à la figure 10, l'extrémité bombée 68 empêche tout contact entre la forme mâle 45 et le fond de la cavité de la partie femelle 41.

## Revendications

1. Dispositif (2) d'amortissement d'oscillations de torsion pour véhicule automobile, ce dispositif (2) comprenant :
- un support (4) mobile en rotation autour d'un axe (X),
- une pluralité de masses oscillantes (5) montées mobiles sur ce support (4), se succédant circonférentiellement, chaque masse oscillante (5) s'étendant circonférentiellement entre deux faces latérales (18),
- une pluralité d'organes de roulement (6), le déplacement de chaque masse oscillante (5) par rapport au support (4) étant guidé par un unique organe de roulement (6),
l'organe de roulement (6) guidant le déplacement d'une masse oscillante (5) par rapport au support (4) étant disposé sensiblement à mi-distance des faces latérales (18) de ladite masse oscillante (5).

2. Dispositif (2) selon la revendication 1, chaque masse oscillante (5) étant articulée sur les masses oscillantes (5) circonférentiellement adjacentes,
au moins une articulation (15) comprenant une pièce d'interposition (16) distincte des masses oscillantes (5).

3. Dispositif (2) selon la revendication 2, la pièce d'interposition (16) étant apte à se déformer lors d'un mouvement relatif entre deux masses oscillantes (5) articulées au niveau de l'articulation (15).

4. Dispositif (2) selon l'une des revendications 2 et 3, la pièce d'interposition (16) étant réalisée en plastique ou en métal.

5. Dispositif (2) selon l'une des quelconques revendications 2 à 4, chaque articulation (15) mettant en oeuvre un contact glissant sensiblement circonférentiel.

6. Dispositif (2) selon l'une des quelconques revendications 2 à 5, l'articulation (15) comprenant :
- une forme mâle (17) s'étendant depuis une face latérale (18) d'une des masses oscillantes (5) en direction de la face latérale (18) en regard de l'autre masse oscillante (5), et
- une forme femelle (20) ménagée dans ladite face latérale (18) de l'autre masse, la pièce d'interposition (16) étant montée dans la forme femelle (20) et coopérant avec la forme mâle (17).

7. Dispositif (2) selon la revendication 6, la pièce d'interposition (16) étant immobile par rapport à la forme femelle (20) et mobile par rapport à la forme mâle (17).

8. Dispositif (2) selon l'une des revendications 6 et 7, la forme femelle (20) comprenant une première cavité (21) débouchant sur la face latérale (18) de cette masse oscillante (5) et une deuxième cavité (22) borgne ménagée dans le fond (24) de la première cavité (21).

9. Dispositif (2) selon la revendication 8, la pièce d'interposition (16) comprenant une première portion (27) montée dans la première cavité (21) et une deuxième portion (28) montée dans la deuxième cavité (22).

10. Dispositif (2) selon l'une des quelconques revendications 2 à 5, l'articulation (15) comprenant deux formes femelles (40, 41), une des formes femelles (40, 41) étant ménagée dans la face latérale (18) d'une des masses oscillantes (5), et l'autre forme femelle (40, 41) étant ménagée dans la face latérale (18) en regard de l'autre masse oscillante (5), la pièce d'interposition (16) définissant deux formes mâles (44, 45) coopérant avec une des formes femelles (40, 41), l'une des formes mâles (44) étant immobile par rapport à la forme femelle (40) avec laquelle elle coopère et l'autre forme mâle (45) étant mobile par rapport à la forme femelle (41) avec laquelle elle coopère.

11. Dispositif (2) selon la revendication 10, l'immobilisation d'une partie mâle (44) de la pièce d'interposition (16) avec la partie femelle (40) correspondante étant obtenue par verrouillage de forme.

12. Dispositif (2) selon l'une des revendications 10 et 11, la forme femelle (41) et la forme mâle (45) mobile par rapport à celle-ci ayant des formes différentes permettant un mouvement relatif entre ces dernières.

13. Dispositif (2) selon la revendication 12, la forme mâle (45) ayant dans un plan perpendiculaire à l'axe de rotation une forme circulaire et la forme femelle (41), par rapport à laquelle elle est mobile, pouvant comprendre dans ce plan une cavité oblongue.

14. Dispositif (2) selon la revendication 12, la forme mâle (45) définissant, dans un plan perpendiculaire à l'axe (X), une pluralité de bras (55, 56, 57) deux à deux distincts, chaque bras (55, 56, 57) comprenant une extrémité libre apte à venir en contact avec le contour de la cavité oblongue de la partie femelle (41) par rapport à laquelle elle est mobile.

15. Dispositif (2) selon l'une des revendications 13 ou 14, un tampon est prévu entre la forme femelle (41) et la forme mâle (45) mobile par rapport à cette forme femelle (41).
